# EUROPÄISCHE PATENTSCHRIFT

(11) **EP 2 199 678 B1**
(45) Veröffentlichungstag und Bekanntmachung des Hinweises auf die Patenterteilung: **19.10.2016**
(21) Anmeldenummer: 09176832.5
(22) Anmeldetag: 24.11.2009
(51) Int. Cl.: F01N 9/00, F23D 11/24, F23D 99/00, F23K 5/04, F23N 1/02

(54) **Brenner eines Fahrzeugheizgerätes**
Burner for a vehicle heating device
Brûleur pour dispositif de chauffage pour véhicule

(30) Priorität: 19.12.2008 DE 102008063990
(43) Veröffentlichungstag der Anmeldung: 23.06.2010
(73) Patentinhaber: Robert Bosch GmbH, 70469 Stuttgart (DE)
(72) Erfinder: Gaiser, Gerd, 72768, Reutlingen (DE)

(56) Entgegenhaltungen:
- EP-A1- 1 591 154
- EP-A2- 1 378 710
- WO-A1-02/063266
- WO-A1-2008/080183
- WO-A2-02/066809
- DE-A1- 4 216 523
- DE-A1- 4 447 286
- DE-A1- 10 240 208
- US-A- 5 277 025

## Beschreibung

Die vorliegende Erfindung betrifft einen Fahrzeugbrenner zum Heizen einer Gasströmung in einem Kraftfahrzeug.

Ein derartiger Fahrzeugbrenner kann bspw. zum Aufheizen einer Abgasreinigungseinrichtung verwendet werden, die in einer Abgasanlage einer Brennkraftmaschine des Kraftfahrzeugs angeordnet ist. Der Fahrzeugbrenner kann dabei zum Verkürzen der Zeit genutzt werden, die erforderlich ist, die jeweilige Abgasreinigungseinrichtung auf eine Mindestbetriebstemperatur oder Regenerationstemperatur zu bringen, ab der sie ihre Abgasreinigungsfunktion mit ausreichender Effektivität bzw. ihre Regeneration durchführen kann. Der Fahrzeugbrenner dient somit zur Reduzierung von Schadstoffemissionen. Ebenso ist es grundsätzlich möglich, einen derartigen Fahrzeugbrenner in einer fahrzeugseitigen, unabhängig von einer Brennkraftmaschine des Fahrzeugs betreibbaren Heizeinrichtung zu verwenden, bspw. in einer Standheizung bzw. in einem Zuheizer.

Ein derartiger Fahrzeugbrenner kann eine Kraftstoffpumpe zum Fördern eines Kraftstoffs zu einer betätigbaren Einspritzdüse aufweisen. Mit Hilfe der betätigbaren Einspritzdüse, so genannter Injektor, kann Kraftstoff in eine Brennkammer eingespritzt werden. Ferner umfasst der Fahrzeugbrenner eine Luftförder- und/oder Luftregeleinrichtung, z. Bsp. ein Gebläse, eine Pumpe oder eine Druckquelle, zum Fördern von Luft zur Brennkammer. Eine zum Betreiben des Fahrzeugbrenners vorgesehene Steuerung ist auf geeignete Weise mit der Kraftstoffpumpe und mit der Luftförder- und/oder Luftregeleinrichtung sowie mit der Einspritzdüse gekoppelt. Zum Einstellen einer vorgegebenen Heizleistung betätigt die Steuerung die Einspritzdüse zum Einspritzen einer hierzu erforderlichen Kraftstoffmenge und die Luftförder- und/oder Luftregeleinrichtung zum Zuführen einer zugehörigen Luftmenge. Dabei ist es üblich, dass die Kraftstoffpumpe im Betrieb des Fahrzeugbrenners einen konstanten Kraftstoffdruck bereitstellt, wobei die in die Brennkammer eingespritzte Kraftstoffmengen mit Hilfe der Einspritzdüse einstellbar ist. Beispielsweise kann die Einspritzdüse unterschiedliche Öffnungsgrade aufweisen, die sich durch unterschiedliche Durchströmungswiderstände voneinander unterscheiden. Zusätzlich oder alternativ kann die Einspritzdüse getaktet betrieben werden, wobei insbesondere die Öffnungszeitdauer und die Taktfrequenz einstellbar sind, um nach Art einer Puls-Weiten Modulation die jeweilige Kraftstoffmenge einstellen zu können.

Die für die jeweilige Kraftstoffmenge erforderliche Luftmenge kann bspw. durch eine vorgegebene Luftzahl, so genannter Lambda-Wert oder Kraftstoff-LuftVerhältnis, bestimmt sein. Die Luftzahl wird üblicherweise so gewählt, dass sich möglichst niedrige Schadstoffemissionen ergeben.

Das Dokument EP 1 378 710 offenbart einen Fahrzeugbrenner gemäß dem Oberbegriff des Anspruchs 1.

Die vorliegende Erfindung beschäftigt sich mit dem Problem, für einen Fahrzeugbrenner der eingangs genannten Art eine verbesserte Ausführungsform anzugeben, die sich insbesondere dadurch auszeichnet, dass eine bessere Kraftstoffumsetzung realisierbar ist.

Dieses Problem wird durch den Gegenstand des unabhängigen Anspruchs gelöst. Vorteilhaft Ausführungsformen sind Gegenstand der abhängigen Ansprüche.

Die Erfindung beruht auf dem allgemeinen Gedanken, den Kraftstoffdruck in Abhängigkeit der geforderten Heizleistung zu modulieren. Die Erfindung nutzt hierbei die Erkenntnis, dass durch Verändern des Kraftstoffdrucks bzw. des Einspritzdrucks Einspritzparamenter, wie z. Bsp. Tröpfchengröße, Tröpfchengeschwindigkeit, Einspritzwinkel und Einspritzeindringtiefe, gezielt verändert werden können. Ferner nutzt die Erfindung die Erkenntnis, dass die von der Heizleistung abhängige Luftmenge in der Brennkammer zu stark unterschiedlichen Luftgeschwindigkeiten führt, was einen signifikanten Einfluss auf die Gemischbildung hat. Insbesondere beeinflusst die Luftgeschwindigkeit die Geometrie der Gemischbildungszone innerhalb der Brennkammer, die Durchdringung von Einspritzstrahl und Luftströmung, die Vermischung von Kraftstoff und Luft, die Verdampfung der eingespritzten Tröpfchen sowie allgemein eine Wechselwirkung zwischen eingespritzten Tröpfchen und Luft. Die erfindungsgemäß vorgeschlagene Anpassung des Kraftstoffdrucks bzw. des Einspritzdrucks an die aktuell gewünschte Brennerleistung berücksichtigt diese Zusammenhänge, so dass für jeden Lastfall und somit für jede Luftmenge die Kraftstoffeinspritzung bei einem hierfür besonders geeigneten Kraftstoffdruck realisierbar ist. Für die zusammenwirkenden Einspritzparameter, wie z. Bsp. Tröpfchengröße, Einspritzwinkel und Tröpfchengeschwindigkeit, kann somit für jeden Lastfall bzw. für jede Luftmenge ein Optimum bzw. ein optimierter Kompromiss bereitgestellt werden. Insgesamt ergibt sich dadurch eine verbesserte Umsetzung des Kraftstoffs in der Brennkammer. Dies führt zu einer signifikanten Verbesserung des Wirkungsgrads des Fahrzeugbrenners. Besonders vorteilhaft wirkt sich die Adaption des Einspritzdrucks bei niedrigeren Lasten aus. Es hat sich gezeigt, dass ein für große Lasten ausgelegter Kraftstoffdruck bei kleinen Luftmengen bzw. bei kleiner Luftgeschwindigkeit dazu führt, dass vergleichsweise viel flüssiger Kraftstoff an Wänden der Brennkammer auftrifft und dort nur unzureichend umgesetzt werden kann. Insbesondere kann der Kraftstoff verkoken. Durch die Adaption des Kraftstoffdrucks an die Heizleistung des Brenners können bspw. für kleinere Heizleistungen andere Kraftstoffdrücke eingestellt werden, wodurch effektiv vermieden werden kann, dass sich größere Kraftstoffmengen an Wänden der Brennkammer ansammeln. Bei der Erfindung wird die Adaption des Kraftstoffdrucks an die Heizleistung dadurch realisiert, dass die Steuerung zunächst in Abhängigkeit der Heizleistung die hierfür erforderliche Kraftstoffmenge ermittelt, in Abhängigkeit der ermittelten Kraftstoffmenge sowie einer vorgegebenen Luftzahl die benötigte Luftmenge ermittelt und in Abhängigkeit der ermittelten Luftmenge bzw. der Kraftstoffmenge den dazu passenden Kraftstoffdruck ermittelt. Die Ermittlung der einzelnen Betriebsparameter kann dabei teilweise oder vollständig rechnerisch erfolgen. Ebenso können die Betriebsparameter teilweise oder vollständig aus Kennlinien oder Kennfeldern ermittelt werden. Dabei ist es insbesondere möglich, komplexe Kennfelder vorzusehen, aus denen in Abhängigkeit der Heizleistung zumindest zwei der Parameter Kraftstoffmenge, Luftmenge und Kraftstoffdruck auslesbar sind. Insbesondere ist auch ein Kennfeld denkbar, aus dem alle drei Betriebsparameter direkt auslesbar sind. Die Ermittlung der einzelnen Betriebsparameter erfolgt dann nicht schrittweise, sondern simultan.

Die Steuerung kann nun in Abhängigkeit der vorgegebenen Heizleistung die Kraftstoffpumpe zum Einstellen des ermittelten Kraftstoffdrucks, die Luftförder- und/oder Luftregeleinrichtung zum Einstellen der ermittelten Luftmenge und die Einspritzdüse zum Einstellen der ermittelten Kraftstoffmenge betätigen. Die Luftzahl kann dabei fest vorgegeben sein oder ebenfalls in Abhängigkeit der Heizleistung oder auch in Abhängigkeit der Kraftstoffmenge oder anderer Parameter ermittelt werden bzw. vorgegeben sein.

Entsprechend einer besonders vorteilhaften Ausführungsform kann die Steuerung bei der Ermittlung des Kraftstoffdrucks die aktuelle Brennkammertemperatur berücksichtigen. Diese Weiterbildung beruht auf der Erkenntnis, dass die Brennkammertemperatur, die bspw. mittels eines entsprechenden Temperatursensors ermittelt werden kann, einen signifikanten Einfluss auf die Verdampfung der in die Brennkammer bzw. in die Luftströmung eingespritzten Kraftstofftröpfchen hat. Durch Berücksichtigen der Brennkammertemperatur bei der Ermittlung des Kraftstoffdrucks kann die Tröpfchengröße gezielt beeinflusst werden und somit an die Brennkammertemperatur angepasst werden. Auf diese Weise kann für jede Brennkammertemperatur eine geeignete Tröpfchengröße eingestellt werden, um die Verdampfung des Kraftstoffs zu optimieren.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Es zeigen, jeweils schematisch,
- Fig. 1: eine stark vereinfachte, schaltplanartige Prinzipdarstellung eines Kraftfahrzeugs, das mit einem Fahrzeugbrenner ausgestattet ist,
- Fig. 2: eine stark vereinfachte, schaltplanartige Prinzipdarstellung des Fahrzeugbrenners,
- Fig. 3: eine stark vereinfachte, schaltplanartige Prinzipdarstellung einer Brennkammer des Fahrzeugbrenners.

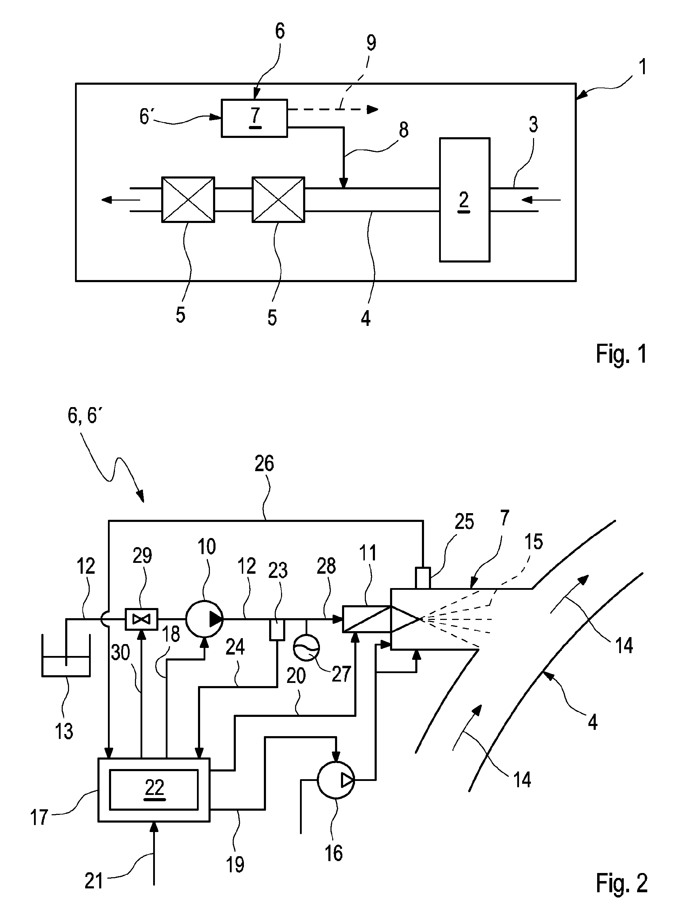

Entsprechend Fig. 1 umfasst ein vereinfacht dargestelltes Kraftfahrzeug 1 eine Brennkraftmaschine 2, die über eine Frischluftanlage 3 Frischluft erhält und über eine Abgasanlage 4 Verbrennungsabgase abführt. In der Abgasanlage 4 können Abgasreinigungseinrichtungen 5, wie z. Bsp. Katalysatoren und Partikelfilter, angeordnet sein. Das Fahrzeug 1 ist außerdem mit einem Fahrzeugbrenner 6 ausgestattet, mit dessen Hilfe eine Gasströmung im Fahrzeug 1 beheizt werden kann. Hierzu setzt der Fahrzeugbrenner 6 in einer Brennkammer 7 flüssigen Kraftstoff mit Luft um. Als Kraftstoff wird dabei zweckmäßig der im Fahrzeug 1 ohnehin zum Betreiben der Brennkraftmaschine 2 mitgeführte Kraftstoff verwendet. Die Brennkammer 7 ist abgasseitig entsprechend einem mit durchgezogener Linie gezeichneten Pfeil 8 an die Abgasanlage 4 angeschlossen. Auf diese Weise können die heißen Brennerabgase der Brennkammer 7 der Abgasanlage 4 zugeführt werden. Die Zuführung dieser heißen Brennerabgase erfolgt dabei innerhalb der Abgasanlage 4 bezüglich einer im Abgasstrang 4 geführten Abgasströmung stromauf wenigstens einer mit Hilfe des Fahrzeugbrenners 6 aufzuheizenden Abgasreinigungseinrichtung 5. Beispielsweise kann während bestimmten Betriebszuständen der Brennkraftmaschine 2, z. Bsp. beim Kaltstart, ein Aufheizen wenigstens einer Abgasreinigungseinrichtung 5 auf eine Betriebstemperatur realisiert werden, damit die jeweilige Abgasreinigungseinrichtung 5 ihre Reinigungsfunktion effektiv erfüllen kann. Beispielsweise besitzen viele Katalysatoren eine Anspringtemperatur, ab der sie ihre katalytische Reinigungswirkung entfalten können. Alternativ oder auch zusätzlich kann der Fahrzeugbrenner 6 als Heizeinrichtung 6' ausgestaltet sein, die unabhängig von der Brennkraftmaschine 2 betrieben werden kann. Eine derartige Heizeinrichtung 6' kann bspw. als Standheizung und/oder Zuheizer ausgestaltet sein. Die in der Brennkammer 7 erzeugten Brennerabgase können dann entsprechend einer mit unterbrochener Linie gezeichneten Pfeil 9 zum Beheizen eines Fahrzeuginnenraums bzw. zum Beheizen der Brennkraftmaschine 2 genutzt werden.

Entsprechend Fig. 2 umfasst der Fahrzeugbrenner 6 (die nachfolgenden Ausführungen gelten entsprechend auch für die Heizeinrichtung 6') eine Kraftstoffpumpe 10, mit deren Hilfe ein Kraftstoff zu einer betätigbaren Einspritzdüse 11 gefördert werden kann, die auch als Injektor 11 bezeichnet werden kann. Hierzu verbindet eine Kraftstoffleitung 12 einen Kraftstofftank 13 mit der Saugseite der Kraftstoffpumpe 10 und die Druckseite der Kraftstoffpumpe 10 mit der Einspritzdüse 11. Die Einspritzdüse 11 dient zum Einspritzen des Kraftstoffs in die Brennkammer 7, die im Beispiel der Fig. 2 abgasseitig bzw. auslassseitig an die Abgasanlage 4 angeschlossen ist. Eine in der Abgasanlage 4 strömende Abgasströmung ist in Fig. 2 durch Pfeile 14 angedeutet. Ferner ist in Fig. 2 ein Einspritzstrahl 15 angedeutet, der mit Hilfe der Einspritzdüse 11 generierbar ist. Der Fahrzeugbrenner 6 umfasst außerdem eine Luftförder- und/oder Luftregeleinrichtung 16, bei der es sich bspw. ebenfalls um eine Pumpe oder um ein Gebläse handeln kann. Ebenso kann es sich um einen Druckluftspeicher oder um eine sonstige Luftquelle handeln. Zum Beispiel kann die Brennkammer 7 über eine geeignete Ventileinrichtung an eine Luftregeleinrichtung einer Druckluftanlage des jeweiligen Fahrzeugs, z.B. eine Luftfederungseinrichtung oder eine Luftdruckbremsanlage, oder eines Abgasturboladers angeschlossen sein. Mit ihr kann Luft, z. Bsp. aus der Umgebung, zur Brennkammer 7 gefördert werden. Desweiteren weist der Fahrzeugbrenner 6 eine Steuerung 17 auf, mit deren Hilfe der Fahrzeugbrenner 6 betrieben werden kann. Sie ist mit der Kraftstoffpumpe 11 über eine Steuerleitung 18, mit der Luftförder- und/oder Luftregeleinrichtung 16 über eine Steuerleitung 19 und mit der Einspritzdüse 11 über eine Steuerleitung 20 gekoppelt. Die Steuerung 17 umfasst zumindest einen, hier nicht gezeigten Prozessor und ist dazu ausgestaltet, in Abhängigkeit einer über eine Signalleitung 21 zugeführten, vorgegebenen Heizleistung eine Kraftstoffmenge zu ermitteln, die erforderlich ist, diese Heizleistung zu realisieren. Die Heizleistung kann bspw. durch ein Steuergerät der Brennkraftmaschine 2 vorgegeben sein oder durch einen Wunsch eines Anwenders. Die Steuerung kann nun in Abhängigkeit der ermittelten Kraftstoffmenge sowie in Abhängigkeit einer Luftzahl, die ebenfalls vorgegeben werden kann oder bereits fest vorgegeben ist, eine Luftmenge ermitteln, die erforderlich ist, in der Brennkammer 7 in Verbindung mit der ermittelten Kraftstoffmenge ein Kraftstoff-Luft-Gemisch zu erzeugen, dass die gewünschte Luftzahl besitzt. Desweiteren ist die Steuerung 17 so ausgestaltet, dass sie in Abhängigkeit der ermittelten Luftmenge einen Kraftstoffdruck ermittelt. Der Kraftstoffdruck hat signifikanten Einfluss auf verschiedene Einspritzparameter, wie z. Bsp. Tröpfchengröße, Tröpfchengeschwindigkeit, Einspritzwinkel und dergleichen. Die Ermittlung des Kraftstoffdrucks erfolgt dabei gezielt so, dass für die jeweilige Luftmenge, die bei einer invarianten Geometrie der Brennkammer 7 zu einer bestimmten Luftgeschwindigkeit führt, optimierte Einspritzparameter erzielt werden. Zum Beispiel kann die Steuerung 17 zunächst in Abhängigkeit der Luftmenge eine daraus resultierende Luftgeschwindigkeit ermitteln und dann in Abhängigkeit der Luftgeschwindigkeit den dazu optimalen Einspritzdruck ermitteln. Hierzu kann die Steuerung 17 bspw. auf ein Kennfeld 22 zurückgreifen. Besagtes Kennfeld 22 kann grundsätzlich beliebig komplex sein. Insbesondere kann es in Abhängigkeit der Heizleistung die Kraftstoffmenge und/oder die Luftmenge und/oder die Luftgeschwindigkeit und/oder die Luftzahl und/oder den Kraftstoffdruck liefern.

Die Steuerung 17 ist nun so ausgestaltet, dass sie die vorgegebene Heizleistung dadurch einstellt, dass sie die Luftförder- und/oder Luftregeleinrichtung 16 zum Einstellen der ermittelten Luftmenge, die Kraftstoffpumpe 10 zum Einstellen des ermittelten Kraftstoffdrucks und die Einspritzdüse 11 zum Einstellen der ermittelten Kraftstoffmenge betätigt. Dabei wird die Einspritzdüse 11 in Abhängigkeit des Kraftstoffdrucks mehr oder weniger geöffnet oder hinsichtlich Öffnungsdauer und Öffnungsfrequenz getaktet.

Durch die Variation des Kraftstoffdrucks kann für jede Heizleistung eine optimierte Kraftstoffumsetzung realisiert werden.

Der hier gezeigte Fahrzeugbrenner 6 weist außerdem zumindest einen Drucksensor 23 auf, der über eine Signalleitung 24 mit der Steuerung 17 gekoppelt ist. Mit Hilfe des Drucksensors 23 kann der Kraftstoffdruck in der Kraftstoffleitung 12 gemessen werden, und zwar zwischen der Kraftstoffpumpe 10 und der Einspritzdüse 11. Hierzu kann der Drucksensor 23 direkt an der Kraftstoffleitung 12 oder ausgangsseitig an der Kraftstoffpumpe 10 oder eingangsseitig an der Einspritzdüse 11 angeordnet sein. Die Steuerung 17 kann nun zum Einstellen des ermittelten Kraftstoffdrucks, der einen Soll-Kraftstoffdruck bildet, den mit Hilfe des Drucksensors 23 gemessenen Kraftstoffdruck, der einen Ist-Kraftstoffdruck bildet, mit dem Soll-Kraftstoffdruck vergleichen, um in Abhängigkeit der Differenz, die Kraftstoffpumpe 10 zu regeln. Mit anderen Worten, die Steuerung 17 regelt die Kraftstoffpumpe 10 in Abhängigkeit eines Soll-Ist-Vergleichs des Kraftstoffdrucks. Für die Druckregelung kann eine Proportionalregelung zweckmäßig sein. Ebenso kann ein PID-Regel-Algorithmus oder auch ein anderer Regelalgorithmus zur Anwendung kommen. Ziel der Regelung ist die Realisierung möglichst geringer Druckschwankungen in der Kraftstoffleitung 12.

Zusätzlich oder alternativ kann der Fahrzeugbrenner 6 mit wenigstens einem Temperatursensor 25 ausgestattet sein, der über eine Signalleitung 26 mit der Steuerung 17 gekoppelt ist. Der Temperatursensor 25 ist dabei zum Messen einer Brennkammertemperatur vorgesehen. Beispielsweise misst der Temperatursensor 25 die Temperatur einer Wand der Brennkammer 7. Ebenso kann der Temperatursensor 25 die Temperatur der Brennerabgase messen. Die Steuerung 17 kann nun bei der Ermittlung des erforderlichen Kraftstoffdrucks die aktuelle Brennkammertemperatur berücksichtigen. Diese Berücksichtigung kann dabei bereits im Kennfeld 22 hinterlegt sein. Durch die Berücksichtigung der Brennkammertemperatur kann bspw. die Tröpfchengröße variiert werden, um die Verdampfung des eingespritzten Kraftstoffs zu optimieren. Zusätzlich oder alternativ kann die Umgebungstemperatur und/oder Kraftstofftemperatur berücksichtigt werden, um über einen entsprechend adaptierten Kraftstoffdruck z.B. Viskositätsunterschiede auszugleichen. Die Tröpfchengröße korreliert dabei mit dem Kraftstoffdruck, wobei diese Korrelation zwischen Tröpfchengröße und Kraftstoffdruck bei der Berücksichtigung der Brennkammertemperatur herangezogen wird.

Die Steuerung 17 kann die Förderleistung der Kraftstoffpumpe 10 verändern, um den jeweils gewünschten Kraftstoffdruck einzustellen. Die Kraftstoffpumpe 10 kann bspw. als Rotationspumpe ausgestaltet sein, z. Bsp. in Form einer Kreiselpumpe oder einer Zahnradpumpe oder einer Drehschieberpumpe oder dergleichen. Die Steuerung 17 kann bei einer solchen Rotationspumpe die Drehzahl verändern, um die jeweilige Förderleistung und somit den Kraftstoffdruck einzustellen. Alternativ kann die Kraftstoffpumpe 10 auch als Oszillationspumpe ausgestaltet sein, wie z. Bsp. eine Kolbenpumpe oder eine Membranpumpe oder dergleichen. Die Steuerung kann bei einer solchen Oszillationspumpe die Hubfrequenz und/oder die Hublänge und/oder die Hubgeschwindigkeit variieren, um die jeweils gewünschte Förderleistung und somit den Kraftstoffdruck einzustellen. Alternativ kann die jeweilige Kraftstoffpumpe 10 eine mit Hilfe der Steuerung 17 einstellbare Drossel sowie einen Bypass aufweisen. Die Kraftstoffpumpe 10 arbeitet dann stationär und durch Variieren der Drossel kann der ausgangsseitige Druck eingestellt werden. Nicht benötigter Kraftstoff fließt über den Bypass zurück in den Tank oder intern zurück zur Saugseite.

An die Kraftstoffleitung 12 kann gemäß der hier gezeigten Ausführungsform ein Druckspeicher 27 angeschlossen sein, wodurch es möglich ist, Druckschwankungen im kraftstoffführenden System auszugleichen bzw. zu dämpfen. Besonders vorteilhaft ist dabei eine Ausführungsform, bei welcher die Kraftstoffleitung 12 zumindest in einem von der Kraftstoffpumpe 10 zur Einspritzdüse 11 führenden Abschnitt als Druckspeicher 28 ausgestaltet ist. Beispielsweise besitzt besagter Leitungsabschnitt 28 ein vergleichsweise großes Volumen.

Entsprechend einer vorteilhaften Ausführungsform kann die Steuerung 17 so ausgestaltet sein, dass sie beim Einstellen des Kraftstoffdrucks eine Druckelastizität des Kraftstoffsystems berücksichtigt. Besagtes Kraftstoffsystem erstreckt sich dabei von der Kraftstoffpumpe 10 bis zur Einspritzdüse 11 und umfasst somit zumindest den zugehörigen Abschnitt der Kraftstoffleitung 12 und insbesondere den Druckspeicher 27 bzw. 28.

Im Beispiel der Fig. 2 ist der Fahrzeugbrenner 6 außerdem mit einer Sperreinrichtung 29 ausgestattet, bei der es sich bspw. um ein Ventil, insbesondere um ein Magnetventil handeln kann. Die Sperreinrichtung 29 ist über eine Steuerleitung 30 mit der Steuerung 17 gekoppelt. Sie ist in der Kraftstoffleitung 12 angeordnet und zwar zweckmäßig stromauf der Kraftstoffpumpe 10. Sie ist möglichst nahe am Kraftstofftank 13 angeordnet. Die Steuerung 17 betätigt die Sperreinrichtung 29 beim Ausschalten des Fahrzeugbrenners 6 zum Sperren der Kraftstoffleitung 12. In der Folge ist die Kraftstoffleitung 12 bei ausgeschaltetem Fahrzeugbrenner 6 gesperrt. Bei einer alternativen Ausführungsform kann die Kraftstoffpumpe 10 abhängig von ihrer Konstruktion eine Sperrfunktion aufweisen, so dass auf die zusätzliche Sperreinrichtung 29 verzichtet werden kann. Die Sperrfunktion der jeweiligen Kraftstoffpumpe 10 kann bspw. durch eine bestimmte Relativlage eines Förderglieds der Kraftstoffpumpe 10 realisiert werden. Bei aktivierter Sperrfunktion sperrt die Kraftstoffpumpe 10 die Kraftstoffleitung 12. Die Steuerung 17 kann nun beim Ausschalten des Fahrzeugbrenners 6 die Kraftstoffpumpe 10 zum Aktivieren der Sperrfunktion betätigen. In der Folge ist die Kraftstoffleitung 12 bei ausgeschaltetem Fahrzeugbrenner 6 gesperrt.

Die Druckbereiche, in denen die Kraftstoffdrücke abhängig von der Heizleistung des Fahrzeugbrenners 6 variiert werden können, hängen insbesondere von der Kraftstoffpumpe 10 ab und können bspw. in einem Bereich von einschließlich 1 bar bis einschließlich 10 bar liegen. Bevorzugt ist dabei ein Druckbereich von einschließlich 2 bar bis einschließlich 8 bar. Besonders vorteilhaft kann ein Druckbereich von einschließlich 3 bar bis einschließlich 6 bar sein.

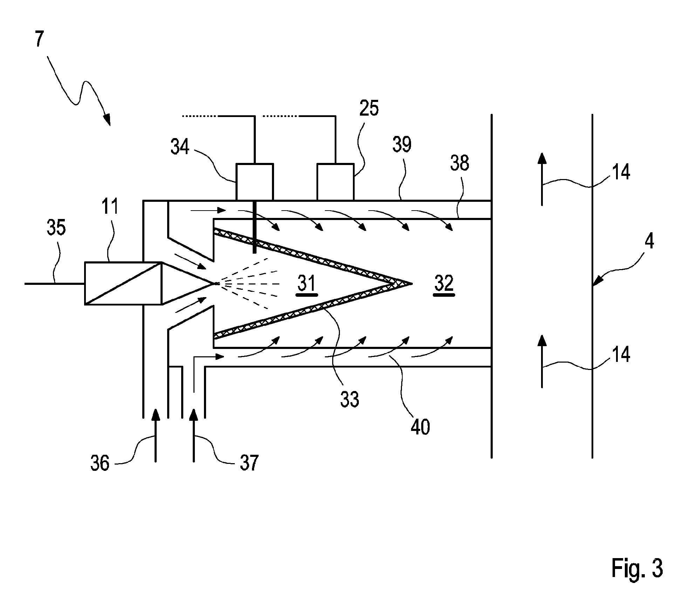

Entsprechend Fig. 3 kann die Brennkammer 7 eine Primärbrennzone 31 und eine Sekundärbrennzone 32 aufweisen. Die Einspritzdüse 11 ist an der Brennkammer 7 so angebracht, dass sie den Kraftstoff ausschließlich in die Primärbrennzone 31 einspritzt. Die Brennkammer 7 weist eine poröse, durchströmbare Struktur 33 auf, welche die Primärbrennzone 31 von der Sekundärbrennzone 32 trennt. Die Struktur 33 stellt sicher, dass kein flüssiger Kraftstoff in die Sekundärbrennzone 32 gelangt. Es ist jedoch durchaus beabsichtigt, dass dampfförmiger Kraftstoff durch die Struktur 33 in die Sekundärbrennzone 32 gelangt. Insoweit kann die Umsetzung des Kraftstoffs in der Brennkammer 7 in eine Voroxidation, die in der Primärbrennzone 31 stattfindet, und eine Nachoxidation unterteilt werden, die in der Sekundärbrennzone 32 erfolgt. Die Struktur 33 ist hier bevorzugt kegelförmig ausgestaltet. Es ist auch eine zylindrische Form denkbar. Zum Zünden der Verbrennungsreaktion kann eine Zündeinrichtung 34 vorgesehen sein, z. Bsp. ein Glühstift oder eine Zündkerze oder ein Piezozünder. Ein Pfeil 35 deutet dabei die Zuführung des flüssigen Kraftstoffs zur Einspritzdüse 11 an. Die von der Luftfördereinrichtung 16 geförderte Luft wird bei der in Fig. 3 gezeigten Brennkammer 7 in Primärluft 36 und Sekundärluft 37 aufgeteilt, was durch entsprechende Pfeile angedeutet ist. Die Primärluft 36 wird dabei der Primärbrennzone 31 zugeführt, während die Sekundärluft 37 der Sekundärbrennzone 32 zugeführt wird. Die Primärluft 36 kann dabei insbesondere koaxial zum Einspritzstrahl in die Primärbrennzone 31 einströmen.

Die Brennkammer 7 weist ein Innenrohr 38 auf, in dem die beiden Brennzonen 31, 32 sowie die Struktur 33 angeordnet sind. Ferner weist die Brennkammer 7 ein Außenrohr 39 auf, das koaxial zum Innenrohr 38 angeordnet ist, dieses umschließt und dabei einen Ringraum 40 ausbildet. Durch diesen Ringraum 40 strömt die Sekundärluft in die Sekundärbrennzone 32. Dabei durchströmt die Sekundärluft 37 eine Wand des Innenrohrs 38, das zu diesem Zweck entsprechende Wandöffnungen aufweist. Die Brennkammer 7, insbesondere die Sekundärbrennzone 32, ist entsprechend Fig. 3 abgasseitig bzw. auslassseitig wieder an die Abgasanlage 4 angeschlossen, in der im Betrieb der Brennkraftmaschine 2 eine Abgasströmung 14 herrscht. Obwohl in Fig. 3 eine senkrechte Anordnung von Brennkammer 7 und Abgasanlage 4 dargestellt ist, können auch andere Winkel vorgesehen sein, um den Strömungswiderstand zu reduzieren.

## Patentansprüche

1. Fahrzeugbrenner zum Heizen einer Gasströmung in einem Kraftfahrzeug (1),
- mit einer Kraftstoffpumpe (10) zum Fördern eines Kraftstoffs zu einer betätigbaren Einspritzdüse (11) zum Einspritzen des Kraftstoffs in eine Brennkammer (7),
- mit einer Luftförder- und/oder Luftregeleinrichtung (16) zum Fördern von Luft zur Brennkammer (7),
- mit einer Steuerung (17) zum Betreiben des Fahrzeugbrenners (6), die mit der Kraftstoffpumpe (10) und mit der Luftförder- und/oder Luftregeleinrichtung (16) gekoppelt ist,
- wobei Brennerabgas, das im Betrieb des Fahrzeugbrenners (6) durch die Umsetzung von Kraftstoff mit Luft in der Brennkammer (7) entsteht, zum Heizen der Gasströmung (14) genutzt wird,
- wobei die Steuerung (17) in Abhängigkeit einer vorgebbaren Heizleistung eine Kraftstoffmenge, eine Luftmenge sowie einen Kraftstoffdruck ermittelt.
- wobei die Steuerung (17) zum Einstellen der vorgegebenen Heizleistung die Luftförder- und/oder Luftregeleinrichtung (16) zum Einstellen der ermittelten Luftmenge und die Kraftstoffpumpe (10) zum Einstellen des ermittelten Kraftstoffdrucks betätigt,
**dadurch gekennzeichnet,**
**dass** die Steuerung (17) außerdem mit der Einspritzdüse (11) gekoppelt ist und diese zum Einstellen der ermittelten Kraftstoffmenge betätigt, derart, dass die Einspritzdüse (11) in Abhängigkeit des Kraftstoffdrucks mehr oder weniger geöffnet oder hinsichtlich Öffnungsdauer und Öffnungsfrequenz getaktet wird.

2. Fahrzeugbrenner nach Anspruch 1,
**dadurch gekennzeichnet,**
- **dass** die Steuerung (17) in Abhängigkeit einer vorgebbaren Heizleistung eine Kraftstoffmenge ermittelt,
- **dass** die Steuerung (17) in Abhängigkeit der ermittelten Kraftstoffmenge und einer vorgebbaren oder vorgegebenen Luftzahl eine Luftmenge ermittelt,
- **dass** die Steuerung (17) in Abhängigkeit der ermittelten Luftmenge und/oder der ermittelten Kraftstoffmenge einen Kraftstoffdruck ermittelt.

3. Fahrzeugbrenner nach Anspruch 1 oder 2,
**dadurch gekennzeichnet,**
- **dass** die Kraftstoffpumpe (10) über eine Kraftstoffleitung (12) mit einer Einspritzdüse (11) verbunden ist,
- **dass** ein mit der Steuerung (17) gekoppelter Drucksensor (23) zum Messen des Kraftstoffdrucks in der Kraftstoffleitung (12) vorgesehen ist,
- **dass** die Steuerung (17) die Kraftstoffpumpe (10) in Abhängigkeit eines Soll-Ist-Vergleichs zwischen dem ermittelten Soll-Kraftstoffdruck und dem gemessenen Ist-Kraftstoffdruck regelt.

4. Fahrzeugbrenner nach einem der Ansprüche 1 bis 3,
**dadurch gekennzeichnet,**
- **dass** ein mit der Steuerung (17) gekoppelter Temperatursensor (25) zum Messen einer Brennkammertemperatur vorgesehen ist, wobei die Steuerung (17) bei der Ermittlung des Kraftstoffdrucks die aktuelle Brennkammertemperatur berücksichtigt, und/oder
- **dass** ein mit Steuerung (17) gekoppelter Temperatursensor zum Messen einer Umgebungstemperatur vorgesehen ist, wobei die Steuerung (17) bei der Ermittlung des Kraftstoffdrucks die aktuelle Umgebungstemperatur berücksichtigt, und/oder
- **dass** ein mit der Steuerung (17) gekoppelter Temperatursensor zum Messen einer Kraftstofftemperatur vorgesehen ist, wobei die Steuerung (17) bei der Ermittlung des Kraftstoffdrucks die aktuelle Kraftstofftemperatur berücksichtigt.

5. Fahrzeugbrenner nach einem der Ansprüche 1 bis 4,
**dadurch gekennzeichnet,**
**dass** die Steuerung (17) zum Einstellen des Kraftstoffdrucks eine Förderleistung der Kraftstoffpumpe (10) verändert.

6. Fahrzeugbrenner nach Anspruch 5,
**dadurch gekennzeichnet,**
- **dass** die Steuerung (17) bei einer als Rotationspumpe ausgestalteten Kraftstoffpumpe (10) zum Einstellen der Förderleistung die Drehzahl verändert, oder
- **dass** die Steuerung bei einer als Oszillationspumpe ausgestalteten Kraftstoffpumpe (10) zum Einstellen der Förderleistung die Hubfrequenz und/oder die Hublänge und/oder die Hubgeschwindigkeit verändert.

7. Fahrzeugbrenner nach einem der Ansprüche 1 bis 6,
**dadurch gekennzeichnet,**
- **dass** ein Druckspeicher (27) vorgesehen ist, der an eine die Kraftstoffpumpe (10) mit der Einspritzdüse (11) verbindende Kraftstoffleitung (12) angeschlossen ist, oder
- **dass** eine die Kraftstoffpumpe (10) mit der Einspritzdüse (11) verbindende Kraftstoffleitung (12) als Druckspeicher (28) ausgestaltet ist.

8. Fahrzeugbrenner nach einem der Ansprüche 1 bis 7,
**dadurch gekennzeichnet,**
**dass** die Steuerung (17) beim Einstellen des Kraftstoffdrucks eine Druckelastizität des sich von der Kraftstoffpumpe (10) zur Einspritzdüse (11) erstreckenden Kraftstoffsystems berücksichtigt.

9. Fahrzeugbrenner nach einem der Ansprüche 1 bis 8,
**dadurch gekennzeichnet,**
- **dass** eine mit der Steuerung (17) gekoppelte Sperreinrichtung (29) vorgesehen ist, die in einer von einem Kraftstofftank (13) über die Kraftstoffpumpe (10) zur Einspritzdüse (11) führenden Kraftstoffleitung (12) angeordnet ist,
- **dass** die Steuerung (17) beim Ausschalten des Fahrzeugbrenners (6) die Sperreinrichtung (29) zum Sperren der Kraftstoffleitung (12) betätigt, so dass die Kraftstoffleitung (12) bei ausgeschaltetem Fahrzeugbrenner (6) gesperrt ist.

10. Fahrzeugbrenner nach einem der Ansprüche 1 bis 8,
**dadurch gekennzeichnet,**
- **dass** in die Kraftstoffpumpe (10) eine Sperrfunktion integriert ist, bei deren Aktivierung die Kraftstoffpumpe (10) eine von einem Kraftstofftank (13) über die Kraftstoffpumpe (10) zur Einspritzdüse (11) führende Kraftstoffleitung (12) sperrt,
- **dass** die Steuerung (17) beim Ausschalten des Fahrzeugbrenners (6) die Sperrfunktion aktiviert, so dass die Kraftstoffleitung (12) bei ausgeschaltetem Fahrzeugbrenner (6) gesperrt ist.

11. Fahrzeugbrenner nach einem der Ansprüche 1 bis 10,
**dadurch gekennzeichnet,**
**dass** die Kraftstoffpumpe (10) und die Steuerung (17) so ausgestaltet sind, dass der Kraftstoffdruck in einem Bereich von einschließlich 1 bar bis einschließlich 10 bar oder von einschließlich 2 bar bis einschließlich 8 bar oder von einschließlich 3 bar bis einschließlich 6 bar einstellbar ist.

12. Fahrzeugbrenner nach einem der Ansprüche 1 bis 11,
**dadurch gekennzeichnet,**
- **dass** die Brennkammer (7) eine Primärbrennzone (31) und eine Sekundärbrennzone (32) aufweist,
- **dass** die Einspritzdüse (11) den Kraftstoff ausschließlich in die Primarbrennzone (31) einspritzt,
- **dass** die Primärbrennzone (31) durch eine poröse, durchströmbare Struktur (33) von der Sekundärbrennzone (32) getrennt ist,
- **dass** die von der Luftförder- und/oder Luftregeleinrichtung (16) geförderte Luft in der Primärbrennzone (31) zugeführte Primärluft (36) und der Sekundärbrennzone (32) zugeführte Sekundärluft (37) aufgeteilt ist.

13. Fahrzeugbrenner nach Anspruch 12,
**dadurch gekennzeichnet,**
- **dass** die Brennzonen (31, 32) und die Struktur (33) im Inneren eines Innenrohrs (38) der Brennkammer (7) angeordnet sind, das unter Ausbildung eines Ringraums (40) von einem Außenrohr (39) der Brennkammer (7) umschlossen ist,
- **dass** die Sekundärluft (37) durch den Ringraum (40) und durch Wandöffnungen des Innenrohrs (38) zur Sekundärbrennzone (32) strömt.

14. Fahrzeugbrenner nach einem der Ansprüche 1 bis 13,
**dadurch gekennzeichnet,**
**dass** die Brennkammer (7) zum Aufheizen wenigstens einer Abgasreinigungseinrichtung (5) abgasseitig an eine Abgasanlage (4) einer Brennkraftmaschine (2) angeschlossen ist.

15. Fahrzeugbrenner nach einem der Ansprüche 1 bis 13,
**dadurch gekennzeichnet,**
**dass** die Brennkammer (7) in einer unabhängig von einer Brennkraftmaschine (2) des Fahrzeugs (1) betreibbaren Heizeinrichtung (6'), z. Bsp. Standheizung und/oder Zuheizer, des Fahrzeugs (1) angeordnet ist.

## Claims

1. Vehicle burner for heating a gas flow in a motor vehicle (1),
- having a fuel pump (10) for delivering a fuel to an actuable injection nozzle (11) for injecting the fuel into a combustion chamber (7),
- having an air delivery and/or air regulating device (16) for delivering air to the combustion chamber (7),
- having a controller (17) for operating the vehicle burner (6), which controller is coupled to the fuel pump (10) and to the air delivery and/or air regulating device (16),
- wherein burner exhaust gas which is generated during the operation of the vehicle burner (6) as a result of the reaction of fuel with air in the combustion chamber (7) is utilized for heating the gas flow (14),
- wherein, in a manner dependent on a predefinable heating power, the controller (17) determines a fuel flow rate, an air flow rate and a fuel pressure,
- wherein, in order to set the predefined heating power, the controller (17) actuates the air delivery and/or air regulating device (16) in order to set the determined air flow rate and actuates the fuel pump (10) in order to set the determined fuel pressure,
**characterized**
**in that** the controller (17) is furthermore coupled to the injection nozzle (11) and actuates the latter in order to set the determined fuel flow rate, in such a way that the injection nozzle (11) is opened to a greater or lesser extent, or is adjusted in terms of timing with regard to opening duration and opening frequency, in a manner dependent on the fuel pressure.

2. Vehicle burner according to Claim 1,
**characterized**
- **in that** the controller (17) determines a fuel flow rate in a manner dependent on a predefinable heating power,
- **in that** the controller (17) determines an air flow rate in a manner dependent on the determined fuel flow rate and a predefinable or predefined air ratio,
- **in that** the controller (17) determines a fuel pressure in a manner dependent on the determined air flow rate and/or on the determined fuel flow rate.

3. Vehicle burner according to Claim 1 or 2,
**characterized**
- **in that** the fuel pump (10) is connected via a fuel line (12) to an injection nozzle (11),
- **in that** a pressure sensor (23) which is coupled to the controller (17) is provided for measuring the fuel pressure in the fuel line (12),
- **in that** the controller (17) regulates the fuel pump (10) in a manner dependent on a setpoint value-actual value comparison between the determined setpoint fuel pressure and the measured actual fuel pressure.

4. Vehicle burner according to one of Claims 1 to 3,
**characterized**
- **in that** a temperature sensor (25) which is coupled to the controller (17) is provided for measuring a combustion chamber temperature, wherein the controller (17) takes the present combustion chamber temperature into consideration in the determination of the fuel pressure, and/or
- **in that** a temperature sensor which is coupled to the controller (17) is provided for measuring an ambient temperature, wherein the controller (17) takes the present ambient temperature into consideration in the determination of the fuel pressure, and/or
- **in that** a temperature sensor which is coupled to the controller (17) is provided for measuring a fuel temperature, wherein the controller (17) takes the present fuel temperature into consideration in the determination of the fuel pressure.

5. Vehicle burner according to one of Claims 1 to 4,
**characterized**
**in that** the controller (17) varies a delivery power of the fuel pump (10) in order to set the fuel pressure.

6. Vehicle burner according to Claim 5,
**characterized**
- **in that**, in the case of a fuel pump (10) in the form of a rotary pump, the controller (17) varies the rotational speed in order to adjust the delivery power, or
- **in that**, in the case of a fuel pump (10) in the form of an oscillation pump, the controller varies the stroke frequency and/or the stroke length and/or the stroke speed in order to adjust the delivery power.

7. Vehicle burner according to one of Claims 1 to 6,
**characterized**
- **in that** a pressure accumulator (27) is provided which is connected to a fuel line (12) which connects the fuel pump (10) to the injection nozzle (11), or
- **in that** a fuel line (12) which connects the fuel pump (10) to the injection nozzle (11) is in the form of a pressure accumulator (28).

8. Vehicle burner according to one of Claims 1 to 7,
**characterized in that** the controller (17) takes a pressure elasticity of the fuel system, which extends from the fuel pump (10) to the injection nozzle (11), into consideration in the setting of the fuel pressure.

9. Vehicle burner according to one of Claims 1 to 8,
**characterized**
- **in that** a shut-off device (29) which is coupled to the controller (17) is provided, which shut-off device is arranged in a fuel line (12) which leads from a fuel tank (13) via the fuel pump (10) to the injection nozzle (11),
- **in that** the controller (17), when deactivating the vehicle burner (6), actuates the shut-off device (29) in order to shut off the fuel line (12), such that, when the vehicle burner (6) is deactivated, the fuel line (12) is shut off.

10. Vehicle burner according to one of Claims 1 to 8,
**characterized**
- **in that** a shut-off function is integrated into the fuel pump (10), upon the activation of which shut-off function the fuel pump (10) shuts off a fuel line (12) which leads from a fuel tank (13) via the fuel pump (10) to the injection nozzle (11),
- **in that** the controller (17), when deactivating the vehicle burner (6), activates the shut-off function, such that, when the vehicle burner (6) is deactivated, the fuel line (12) is shut off.

11. Vehicle burner according to one of Claims 1 to 10,
**characterized**
**in that** the fuel pump (10) and the controller (17) are designed such that the fuel pressure can be set in a range from 1 bar inclusive to 10 bar inclusive or from 2 bar inclusive to 8 bar inclusive or from 3 bar inclusive to 6 bar inclusive.

12. Vehicle burner according to one of Claims 1 to 11,
**characterized**
- **in that** the combustion chamber (7) has a primary combustion zone (31) and a secondary combustion zone (32),
- **in that** the injection nozzle (11) injects the fuel exclusively into the primary combustion zone (31),
- **in that** the primary combustion zone (31) is separated from the secondary combustion zone (32) by a porous structure (33) through which flow can pass,
- **in that** the air delivered by the air delivery and/or air regulating device (16) is divided into primary air (36), which is supplied to the primary combustion zone (31), and secondary air (37), which is supplied to the secondary combustion zone (32).

13. Vehicle burner according to Claim 12,
**characterized**
- **in that** the combustion zones (31, 32) and the structure (33) are arranged in the interior of an inner pipe (38) of the combustion chamber (7), which inner pipe is surrounded by an outer pipe (39) of the combustion chamber (7), such that a ring-shaped chamber (40) is formed,
- **in that** the secondary air (37) flows through the ring-shaped chamber (40) and through wall openings of the inner pipe (38) to the secondary combustion zone (32).

14. Vehicle burner according to one of Claims 1 to 13,
**characterized**
**in that** the combustion chamber (7) is, for the purposes of heating at least one exhaust-gas purification device (5), connected at the exhaust-gas side to an exhaust-gas system (4) of an internal combustion engine (2).

15. Vehicle burner according to one of Claims 1 to 13,
**characterized**
**in that** the combustion chamber (7) is arranged in a heating device (6'), which is operable independently of an internal combustion engine (2) of the vehicle (1), for example an engine-independent heater and/or auxiliary heater, of the vehicle (1).

## Revendications

1. Brûleur de véhicule pour chauffer un flux de gaz dans un véhicule automobile (1) ;
- avec une pompe à carburant (10) pour transporter un carburant jusqu'à une buse d'injection (11) actionnable pour l'injection du carburant dans une chambre de combustion (7) ;
- avec un dispositif de transport d'air et/ou de régulation d'air (16) pour transporter l'air jusqu'à la chambre de combustion (7) ;
- avec un élément de commande (17) pour entraîner le brûleur de véhicule (6), ledit élément de commande étant couplé à la pompe à carburant (10) et au dispositif de transport d'air et/ou de régulation d'air (16) ;
- le gaz d'échappement de brûleur produit en situation de fonctionnement du brûleur de véhicule (6) du fait de la transformation du carburant avec l'air dans la chambre de combustion (7) étant utilisé pour chauffer le flux de gaz (14) ;
- l'élément de commande (17) déterminant, en fonction d'une puissance de chauffe prédéfinissable, une quantité de carburant, une quantité d'air ainsi qu'une pression de carburant ;
- l'élément de commande (17) actionnant, pour régler la puissance de chauffe prédéfinie, le dispositif de transport d'air et/ou de régulation d'air (16) pour régler la quantité d'air déterminée et actionnant la pompe à carburant (10) pour régler la pression de carburant déterminée ;
**caractérisé en ce que** :
l'élément de commande (17) est en outre couplé à la buse d'injection (11) et l'actionne pour régler la quantité de carburant déterminée, de telle sorte que la buse d'injection (11) est plus ou moins ouverte en fonction de la pression de carburant ou synchronisée par rapport à la durée d'ouverture et à la fréquence d'ouverture.

2. Brûleur de véhicule selon la revendication 1, **caractérisé en ce que** :
- l'élément de commande (17) détermine une quantité de carburant en fonction d'une puissance de chauffe prédéfinissable ;
- l'élément de commande (17) détermine une quantité d'air en fonction de la quantité de carburant déterminée et d'un facteur d'air prédéfini ou prédéfinissable ;
- l'élément de commande (17) détermine une pression de carburant en fonction de la quantité d'air déterminée et/ou de la quantité de carburant déterminée.

3. Brûleur de véhicule selon la revendication 1 ou 2, **caractérisé en ce que** :
- la pompe à carburant (10) est reliée à une buse d'injection (11) via une conduite de carburant (12) ;
- un capteur de pression (23) couplé à l'élément de commande (17) est prévu pour mesurer la pression de carburant dans la conduite de carburant (12) ;
- l'élément de commande (17) règle la pompe à carburant (10) en fonction d'une comparaison des valeurs réelle-théorique entre la pression de carburant théorique déterminée et la pression de carburant réelle mesurée.

4. Brûleur de véhicule selon l'une quelconque des revendications 1 à 3, **caractérisé en ce que** :
- un capteur de température (25) couplé à l'élément de commande (17) est prévu pour mesurer une température de chambre de combustion, l'élément de commande (17) prenant en compte la température de chambre de combustion actuelle lors du calcul de la pression de carburant ; et/ou
- un capteur de température couplé à l'élément de commande (17) est prévu pour mesurer une température ambiante, l'élément de commande (17) prenant en compte la température ambiante actuelle lors de la détermination de la pression de carburant ; et/ou
- un capteur de température couplé à l'élément de commande (17) est prévu pour mesurer une température de carburant, l'élément de commande (17) prenant en compte la température de carburant actuelle lors de la détermination de la pression de carburant.

5. Brûleur de véhicule selon l'une quelconque des revendications 1 à 4, **caractérisé en ce que** l'élément de commande (17) fait varier une puissance d'extraction de la pompe à carburant (10) pour régler la pression de carburant.

6. Brûleur de véhicule selon la revendication 5, **caractérisé en ce que** :
- pour régler la puissance d'extraction, l'élément de commande (17) fait varier la vitesse de rotation dans le cas d'une pompe à carburant (10) configurée comme une pompe à rotation ; ou
- pour régler la puissance d'extraction, l'élément de commande fait varier la fréquence de course et/ou la longueur de course et/ou la vitesse de course dans le cas d'une pompe à carburant (10) configurée comme une pompe à oscillation.

7. Brûleur de véhicule selon l'une quelconque des revendications 1 à 6, **caractérisé en ce que** :
- un accumulateur de pression (27) est prévu, celui-ci étant raccordé à une conduite de carburant (12) reliant la pompe à carburant (10) à la buse d'injection (11) ; ou
- une conduite de carburant (12) reliant la pompe à carburant (10) à la buse d'injection (11) est configurée sous la forme d'un accumulateur de pression (28).

8. Brûleur de véhicule selon l'une quelconque des revendications 1 à 7, **caractérisé en ce que** l'élément de commande (17) prend en compte, lors du réglage de la pression de carburant, une élasticité de pression du système de carburant s'étendant de la pompe à carburant (10) à la buse d'injection (11).

9. Brûleur de véhicule selon l'une quelconque des revendications 1 à 8, **caractérisé en ce que** :
- un dispositif de blocage (29) couplé à l'élément de commande (17) est prévu, ledit dispositif étant disposé dans une conduite de carburant (12) allant d'un réservoir de carburant (13) à la buse d'injection (11) en passant par la pompe à carburant (10) ;
- l'élément de commande (17) actionne, lors de la déconnexion du brûleur de véhicule (6), le dispositif de blocage (29) pour bloquer la conduite de carburant (12), de sorte que la conduite de carburant (12) est bloquée lorsque le brûleur de véhicule (6) est bloqué.

10. Brûleur de véhicule selon l'une quelconque des revendications 1 à 8, **caractérisé en ce que** :
- une fonction de blocage est intégrée dans la pompe à carburant (10), la pompe à carburant (10) bloquant à son activation une conduite de carburant (12) allant d'un réservoir de carburant (13) à la buse d'injection (11) en passant par la pompe à carburant (10) ;
- l'élément de commande (17) active, lors de la déconnexion du brûleur de véhicule (6), la fonction de blocage, de sorte que la conduite de carburant (12) est bloquée lorsque le brûleur de véhicule (6) est déconnecté.

11. Brûleur de véhicule selon l'une quelconque des revendications 1 à 10, **caractérisé en ce que** la pompe à carburant (10) et l'élément de commande (17) sont configurés de telle sorte que la pression de carburant peut être réglée dans une plage allant de 1 bar inclus à 10 bars inclus ou de 2 bars inclus à 8 bars inclus ou de 3 bars inclus à 6 bars inclus.

12. Brûleur de véhicule selon l'une quelconque des revendications 1 à 11, **caractérisé en ce que** :
- la chambre de combustion (7) comporte une zone de combustion principale (31) et une zone de combustion secondaire (32) ;
- la buse d'injection (11) injecte le carburant exclusivement dans la zone de combustion principale (31) ;
- la zone de combustion principale (31) est séparée de la zone de combustion secondaire (32) par une structure (33) traversante poreuse ;
- l'air extrait par le dispositif de transport d'air et/ou de régulation d'air (16) est divisé en un air principal (36) amené à la zone de combustion principale (31) et en un air secondaire (37) amené à la zone de combustion secondaire (32).

13. Brûleur de véhicule selon la revendication 12, **caractérisé en ce que** :
- les zones de combustion (31, 32) et la structure (33) sont disposées à l'intérieur d'un tube intérieur (38) de la chambre de combustion (7), ledit tube étant entouré, en formant une chambre annulaire (40), d'un tube extérieur (39) de la chambre de combustion (7) ;
- l'air secondaire (37) s'écoule jusqu'à la zone de combustion secondaire (32) en passant à travers la chambre annulaire (40) et à travers les ouvertures de paroi du tube intérieur (38).

14. Brûleur de véhicule selon l'une quelconque des revendications 1 à 13, **caractérisé en ce que** la chambre de combustion (7) est raccordée du côté de gaz d'échappement à une installation de gaz d'échappement (4) de moteur à combustion interne (2) pour chauffer au moins un dispositif de nettoyage de gaz d'échappement (5).

15. Brûleur de véhicule selon l'une quelconque des revendications 1 à 13, **caractérisé en ce que** la chambre de combustion (7) est disposée dans un dispositif de chauffage (6') pouvant être entraîné indépendamment d'un moteur à combustion interne (2) du véhicule (1), par exemple un chauffage auxiliaire et/ou un chauffage d'appoint du véhicule (1).
